# FASCICULE DE BREVET EUROPEEN

(11) **EP 2 900 451 B1**
(45) Date de publication et mention de la délivrance du brevet: **31.10.2018**
(21) Numéro de dépôt: 13759769.6
(22) Date de dépôt: 11.09.2013
(51) Int. Cl.: B29C 47/06, B29C 47/10, B29C 47/70, B82Y 30/00, B29C 47/40, B29K 105/16

(54) **PROCÉDÉ D'ÉLABORATION D'UN MATERIAU COMPOSITE THERMOPLASTIQUE RENFORCÉ PAR DES NANOTUBES DE CARBONE**
VERFAHREN ZUR HERSTELLUNG EINES THERMOPLASTISCHEN VERBUNDWERKSTOFFS MIT VERSTÄRKUNG DURCH KOHLENSTOFFNANORÖHRCHEN
PROCESS FOR PRODUCING A THERMOPLASTIC COMPOSITE MATERIAL REINFORCED WITH CARBON NANOTUBES

(30) Priorité: 26.09.2012 FR 1259010
(43) Date de publication de la demande: 05.08.2015
(73) Titulaire: PSA Automobiles SA, 78300 Poissy (FR); Conservatoire National des Arts et Métiers, 75141 Paris Cedex 03 (FR)
(72) Inventeur: DELALANDE, Stephane, F-91310 Longpont Sur Orge (FR); FROMONTEIL, Didier, F-93000 Bobigny (FR); GUINAULT, Alain, F-77124 Cregy Les Meaux (FR); SOLLOGOUB, Cyrille, F-75141 Paris cedex 03 (FR); MIQUELARD-GARNIER, Guillaume, F-94140 ALfortville (FR)
(74) Mandataire: Renous Chan, Véronique
(86) Numéro de dépôt international: PCT/EP2013/068849
(87) Numéro de publication internationale: WO 2014/048755

(56) Documents cités:
- WO-A1-01/76871
- WO-A1-2011/019408
- WO-A1-2011/060724
- WO-A1-2011/153629
- US-A1- 2005 131 147
- US-A1- 2008 207 824

## Description

La présente invention concerne un procédé d'élaboration d'un matériau composite thermoplastique renforcé par des nanotubes de carbone et un tel matériau composite.

Pour réaliser des matériaux composites thermoplastiques avec des nano-renforts tels que les nanotubes de carbone, les nano argiles, il est connu d'utiliser un procédé dit de compoundage par extrudeuse bi-vis. L'optimisation des paramètres de cette extrusion bi-vis a été étudiée en détails par le groupe de P. Pötschke (voir par exemple Alig I, Pötschke P, Lellinger D, Skipa T, Pegel S, Kasaliwal GR, Villmow T, Establishment, morphology and properties of carbon nanotube networks in polymer melts, Polymer (2011), doi: 10.1016/j.polymer.2011.10.063). Il a notamment été montré qu'une énergie spécifique de mélange SME (de l'anglais « Specific Mixing Energy », exprimée en kJ/kg) élevée, correspondant à un cisaillement élevé et/ou à un temps de séjour long, favorisait la dispersion des nanotubes de carbone dans la matrice composite.

L'ajout des nano-objets peut se faire avec ou sans agent de compatibilisation de la matrice thermoplastique, en différentes zones du fourreau de l'extrudeuse en fonction des procédés de compoundage.

Des exemples de tels procédés sont par exemple décrits dans EP-A-1 728 822, WO-A-2006/136715, EP-B-1 885790 ou WO 2011/019408 A1.

Cependant, ces procédés ne permettent pas d'obtenir un renfort important du matériau (maximum de 30% d'augmentation du module de Young dans le cas de polyamide et inférieur pour les polyoléfines) tout en conservant un allongement à la rupture satisfaisant. Dans tous les cas, une chute drastique de l'allongement à la rupture est observée, jusqu'à être inférieure à 50% pour des polyoléfines. Cette chute s'explique en partie par une mauvaise dispersion des nanotubes de carbone dans le matériau thermoplastique et par un manque d'affinité avec la matrice polyoléfine.

Par ailleurs, il est connu un procédé d'extrusion microcouches utilisé pour disperser des microcharges de talc dans des applications barrière (voir par exemple JOURNAL OF POLYMER SCIENCE PART B-POLYMER PHYSICS, 37, 8, 847-857 DOI: 10.1002/(SICI)1099-0488(19990415)37:8<847::AID-POLB10>3.0.CO;2-3, 1999).

Enfin, un procédé similaire dit de mélange chaotique (de l'anglais « chaotic mixing ») est connu, qui est mis en oeuvre sur des matrices en polyméthacrylate de méthyle (PMMA) ou en polyuréthane (PU) thermoplastiques avec des nanofibres de carbone (voir notamment G.A. Jimenez, S.C. Jana, Carbon, Volume 45, Issue 10, September 2007, Pages 2079-2091).

L'invention propose un procédé d'élaboration d'un matériau composite thermoplastique renforcé par des nanotubes de carbone selon la revendication 1.

Selon une variante, le procédé d'élaboration comprend en outre une étape de :
b') extrusion de l'extrudat obtenu à l'étape a), au moyen d'une extrudeuse bi-vis.

Selon une variante, l'étape c) est réalisée avec une énergie spécifique de mélange supérieure à 2 000 kJ/kg.

Selon une variante, la quantité de nanotubes de carbone est comprise, en poids, entre 0,1 et 10 % du poids total de la matrice du polymère.

Selon une variante, le polymère thermoplastique est à base de polyoléfine, notamment de polypropylène, l'agent de compatibilisation étant du polypropylène greffé anhydre maléique. Il est aussi possible d'utiliser d'autres polymères tels que des polyamides, des polyamides semi-aromatiques, polysulfures de phénylène, les polyéther éther cétone, les polyéther cétone ou des composés styréniques.

Selon une variante, le procédé d'élaboration comprend une étape de mise en forme de plaques, de films, de fils ou de granulés du matériau composite thermoplastique renforcé par des nanotubes de carbone.

L'invention vise également un matériau composite thermoplastique renforcé par des nanotubes de carbone obtenu par un procédé d'élaboration tel que décrit ci-avant dans toutes ses combinaisons.

D'autres caractéristiques et avantages de l'invention apparaîtront à la lecture de la description détaillée qui suit de modes de réalisation de l'invention, donnés à titre d'exemple uniquement et en références aux dessins qui montrent :
- figure 1, une vue schématique d'une installation permettant la mise en oeuvre d'un procédé d'élaboration d'un matériau composite thermoplastique renforcé par des nanotubes de carbone ; et
- figure 2, une étape de multiplication des couches d'un matériau composite thermoplastique au moyen d'éléments multiplicateurs.

Dans la suite, on décrit un exemple de procédé d'élaboration d'un matériau composite thermoplastique renforcé par des nanotubes de carbone. Dans l'exemple décrit, le matériau composite thermoplastique de base est du polypropylène. Bien entendu, le procédé tel que décrit ci-après peut également être mis en oeuvre pour d'autres matériaux composites thermoplastiques, notamment pour d'autres matériaux à base de polyoléfine, comme notamment le polyéthylène.

Les nanotubes de carbones mis en oeuvre ici peuvent être mono-parois ou multi-parois.

On réalise tout d'abord une dilution d'un mélange maître chargé de nanotubes de carbone dans une base de polypropylène par compoundage. Pour rappel, le compoundage est un procédé permettant le mélange par fusion de matières plastiques et d'additifs. Ce procédé permet ainsi de modifier les caractéristiques physiques, thermiques, électriques ou esthétiques d'une matière plastique de base.

Pour cette étape, on introduit dans une trémie une matrice de polypropylène, du mélange maître comprenant des nanotubes de carbone. On ajoute également à cette étape un agent de compatibilisation approprié au polymère de base. Ici, pour du polypropylène, on utilise comme agent de compatibilisation du polypropylène greffé anhydride maléique, PP-g-AM. La concentration en agent de compatibilisation varie en fonction du type de polymère. Dans le cas du polypropylène, le rapport entre la concentration en poids de nanotubes de carbones et la concentration en poids de l'agent de compatibilisation peut être compris entre 5 et 30%. De préférence, ce rapport est égal à 20 %. Il a en effet été constaté qu'une concentration trop importante en agent de compatibilisation était nuisible à l'étape, décrite plus tard, de multiplication des couches.

Dans cette étape, la dilution est réalisée de manière à obtenir un matériau composite thermoplastique de concentration finale en nanotubes de carbone comprise entre environ 0,1 et 10 % en poids, par rapport au poids total de la matrice du polymère.

Le compound obtenu par la dilution est ensuite extrudé, par exemple au moyen d'une extrudeuse bi-vis co-rotative. La température de travail de l'extrudeuse est choisie en fonction de la température de fusion du polymère de base utilisé. Ici, pour le polypropylène, la température de travail peut être choisie égale à 240°C. Un autre paramètre important est l'énergie spécifique de mélange (SME) qui peut être importante, notamment supérieure à 2 000 kJ/kg, pour favoriser les interactions entre l'agent de compatibilisation et les nanotubes de carbone. La valeur de SME peut également dépendre des paramètres de l'extrudeuse utilisée.

Cette phase de compoundage sur une extrudeuse bi-vis permet d'effectuer une première dilution des nanotubes de carbone dans la matrice du polymère et, avec le polypropylène greffé anhydride maléique, une première dispersion des nanotubes dans cette matrice du polymère.

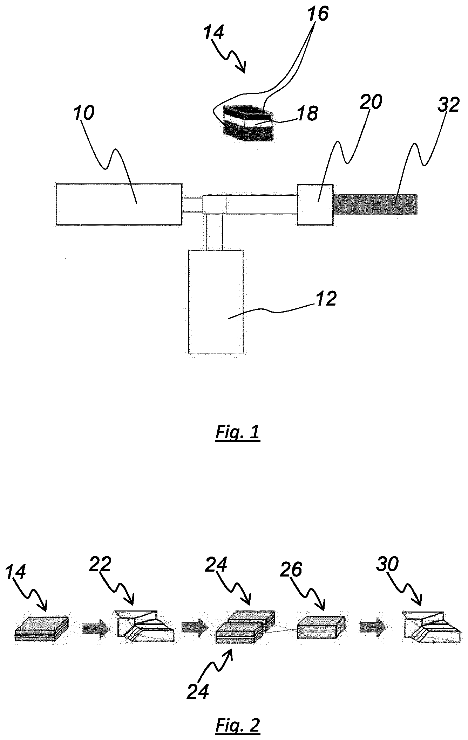

On procède ensuite, comme cela est illustré sur la figure 1, à une coextrusion au moyen de deux extrudeuses 10 ,12 monovis montées en parallèle. A cette étape, une première extrudeuse 10 est alimentée par du polypropylène (sans nanotubes de carbone, ni agent de compatibilisation, notamment) alors que la deuxième extrudeuse 12 est alimentée par le mélange de la matrice de polypropylène, du mélange maître comprenant des nanotubes de carbone et, le cas échéant, d'un agent de compatibilisation. Cette coextrusion est réalisée de manière à former un extrudat présentant des couches d'épaisseur pouvant être nanométrique. Par épaisseur nanométrique, on entend une épaisseur de l'ordre de grandeur du nanomètre, notamment compris entre 10 et 100 nm. On obtient ainsi, par exemple, un extrudat tricouche 14 comprenant deux couches 16 de matrice de polypropylène prenant en sandwich une couche 18 de mélange de la matrice polypropylène avec le mélange maître (dans ce cas les couches sont micrométriques). L'extrudat 14 est sous forme fondue.

La température du polymère, d'une part, et du mélange d'autre part, durant cette phase d'extrusion peut être adaptée en fonction du polymère utilisé. Ici, dans le cas du polypropylène, la température du polypropylène et du mélange est comprise entre la température de fusion du polypropylène plus 30 à 90°C. Bien entendu, cette température doit être adaptée en fonction de la température de dégradation du polymère mis en jeu.

L'extrudat tri-couches 14 est alors passé dans un bloc multiplicateur de couches 20. Ce bloc multiplicateur de couches est chauffé à la température d'extrusion optimisée de l'étape de coextrusion. Le bloc multiplicateur de couches est constitué de préférence d'un à dix éléments multiplicateurs connus dans la littérature (Schrenk, W. J. (1965). Brevet n° 431,336*.* USA). Ces éléments multiplicateurs peuvent être assimilés à des séparateurs/coupeurs de flux de matière. Le nombre d'éléments multiplicateurs gouverne la dispersion finale des nanotubes dans la matrice polymère finale.

La figure 2 illustre le fonctionnement du bloc multiplicateur de couches 20. L'extrudat 14 alimente un premier élément multiplicateur de couches 22. Ce premier élément multiplicateur découpe le flux d'extrudat 14 en deux flux 24 identiques et permet d'obtenir, en sortie, un flux unique 26 de sortie correspondant à la superposition des deux flux 24. Ce flux unique 26 de sortie peut ensuite alimenter un deuxième élément multiplicateur de couches 30. On peut ainsi réaliser un flux de matériau 32 présentant un grand nombre de couches, en choisissant le nombre approprié d'éléments multiplicateurs de couches du bloc multiplicateur de couches.

La présence concomitante de couches avec des nanotubes de carbone bien dispersés et de polymère vierge permet de garantir le renforcement du matériau composite obtenu, tout en conservant un allongement à la rupture satisfaisant.

Le matériau composite ainsi obtenu peut en outre être mis en forme de plaques, de films, de fils ou de granulés. Le matériau composite obtenu, de préférence sous forme de granulés, peut être réinjecté pour production de pièces mécaniques, notamment dans le domaine de l'automobile.

## Revendications

1. Procédé d'élaboration d'un matériau composite thermoplastique renforcé par des nanotubes de carbone, procédé comprenant une étape de :
a) coextrusion d'un polymère thermoplastique et d'un mélange d'une matrice du polymère thermoplastique avec un mélange maître comprenant des nanotubes de carbone,
b) multiplication du nombre de couches de l'extrudat obtenu à l'étape a) au moyen d'un bloc multiplicateur de couches (20), le bloc multiplicateur de couches comprenant de préférence entre un et dix éléments multiplicateurs de couches (22 ; 30) pour former un extrudat d'épaisseur nanométrique et dont la concentration en nanotubes de carbone est choisie,
**caractérisé en ce qu'**il comporte en outre, les étapes, antérieures à l'étape a), de
c) réalisation du mélange du polymère thermoplastique avec le mélange maître comprenant des nanotubes de carbone par compoundage :
- d'une matrice du polymère,
- du mélange maître comprenant des nanotubes de carbone,
- d'un agent de compatibilisation pour les nanotubes de carbone dans le polymère, ladite étape c) étant réalisée avec un rapport de la proportion en poids de nanotubes de carbone par rapport à la proportion en poids d'agent de compatibilisation compris entre 0,05 et 0,3, de préférence égal à 0,2.
d) extrusion du mélange.

2. Procédé d'élaboration selon la revendication 1, comprenant en outre une étape de :
b') extrusion de l'extrudat obtenu à l'étape a), au moyen d'une extrudeuse bi-vis.

3. Procédé d'élaboration selon la revendication 1 ou la revendication 2, dans lequel l'étape d) est réalisée avec une énergie spécifique de mélange supérieure à 2 000 kJ/kg.

4. Procédé d'élaboration selon l'une quelconque des revendications précédentes, dans lequel la quantité de nanotubes de carbone est comprise, en poids, entre 0,01 et 10 % du poids total de la matrice du polymère.

5. Procédé d'élaboration selon l'une quelconque des revendications précédentes, dans lequel le polymère thermoplastique est à base de polyoléfine, notamment du polypropylène, l'agent de compatibilisation étant du polypropylène greffé anhydre maléique.

6. Procédé d'élaboration selon l'une quelconque des revendications précédentes, comprenant une étape de mise en forme de plaques, de films, de fils ou de granulés du matériau composite thermoplastique renforcé par des nanotubes de carbone.

7. Matériau composite thermoplastique renforcé par des nanotubes de carbone obtenu par un procédé d'élaboration selon l'une quelconque des revendications précédentes.

## Patentansprüche

1. Verfahren zur Herstellung eines thermoplastischen Verbundwerkstoffs, der durch Kohlenstoffnanoröhrchen verstärkt ist, wobei das Verfahren einen Schritt umfasst:
a) des Co-Extrudierens eines thermoplastischen Polymers und einer Mischung aus einer Matrix des thermoplastischen Polymers mit einer Vormischung, die Kohlenstoffnanoröhrchen umfasst,
b) des Multiplizierens der Anzahl von Schichten des Extrudats, das bei dem Schritt a) erhalten wird, mittels eines Schichtenmultiplikatorblocks (20), wobei der Schichtenmultiplikatorblock bevorzugt zwischen einem und zehn Schichten multiplikator elementen (22; 30) umfasst, um ein Extrudat mit Nanometerstärke zu bilden, und dessen Konzentration an Kohlenstoffnanoröhrchen ausgewählt ist, **dadurch gekennzeichnet, dass** es außerdem vor dem Schritt a) die folgenden Schritte umfasst
c) Herstellen der Mischung des thermoplastischen Polymers mit der Vormischung, die Kohlenstoffnanoröhrchen umfasst, durch Compoundierung:
- einer Matrix des Polymers,
- einer Vormischung, die Kohlenstoffnanoröhrchen umfasst,
- eines Kompatibilisierungsmittels für die Kohlenstoffnanoröhrchen in dem Polymer, wobei Schritt c) mit einem Verhältnis des Gewichtsanteils an Kohlenstoffnanoröhrchen im Vergleich zu dem Gewichtsanteil an Kompatibilisierungsmittel zwischen 0,05 und 0,3, bevorzugt gleich 0,2 hergestellt wird,
d) Extrusion der Mischung.

2. Herstellungsverfahren nach Anspruch 1, das außerdem einen Schritt umfasst:
b') der Extrusion des bei dem Schritt a) erhaltenen Extrudats mittels einer Doppelschnecken-Extrusionsanlage.

3. Herstellungsverfahren nach Anspruch 1 oder Anspruch 2, wobei der Schritt d) mit einer spezifischen Mischungsenergie größer als 2000 kJ/kg ausgeführt wird.

4. Herstellungsverfahren nach einem der vorhergehenden Ansprüche, wobei die Menge an Kohlenstoffnanoröhrchen in Gewicht zwischen 0,01 und 10 % des Gesamtgewichts der Matrix des Polymers liegt.

5. Herstellungsverfahren nach einem der vorhergehenden Ansprüche, wobei das thermoplastische Polymer auf Polyolefinbasis, insbesondere Polypropylen ist, wobei das Kompatibilisierungsmittel mit Maleinsäureanhydrid gepfropftes Polypropylen ist.

6. Herstellungsverfahren nach einem der vorhergehenden Ansprüche, das einen Schritt des Formens von Platten, Folien, Fäden oder Granulat des mit Kohlenstoffnanoröhrchen verstärkten thermoplastischen Verbundwerkstoffs umfasst.

7. Thermoplastischer Verbundwerkstoff, der durch Kohlenstoffnanoröhrchen verstärkt ist, der durch ein Herstellungsverfahren nach einem der vorhergehenden Ansprüche erhalten wird.

## Claims

1. A process for producing a thermoplastic composite material reinforced with carbon nanotubes, said process including a step of:
a) coextrusion of a thermoplastic polymer and of a mixture of a matrix of the thermoplastic polymer with a master mixture including carbon nanotubes,
b) multiplication of the number of layers of the extrudate obtained in step a) by means of a layer multiplier block (20), the layer multiplier block preferably including between one and ten layer multiplier elements (22; 30) to form an extrudate of nanometric thickness and the concentration of carbon nanotubes of which is selected, **characterized in that** it further comprises the steps,
prior to step a) of
c) production of the mixture of the thermoplastic polymer with the master mixture including carbon nanotubes by compounding:
- of a matrix of the polymer,
- of the master mixture including carbon nanotubes,
- of a compatibilization agent for the carbon nanotubes in the polymer, said step c) being realized with a ratio of the proportion by weight of carbon nanotubes with respect to the proportion by weight of the compatibilization agent comprised between 0.05 and 0.3, preferably equal to 0.2,
d) extrusion of the mixture.

2. The production process according to Claim 1, further including a step of:
b') extrusion of the extrudate obtained in step a), by means of a twin-screw extruder.

3. The production process according to Claim 1 or Claim 2, in which the step d) is realized with a specific mixture energy greater than 2 000 kJ/kg.

4. The production process according to any one of the preceding claims, in which the quantity of carbon nanotubes is comprised, by weight, between 0.01 and 10 % of the total weight of the matrix of the polymer.

5. The production process according to any one of the preceding claims, in which the thermoplastic polymer is based on polyolefin, in particular polypropylene, the compatibilization agent being maleic anhydride grafted polypropylene.

6. The production process according to any one of the preceding claims, including a step of forming of sheets, films, threads or granules of the thermoplastic composite material reinforced with carbon nanotubes.

7. A thermoplastic composite material reinforced with carbon nanotubes obtained by a production process according to any one of the preceding claims.
